# EUROPEAN PATENT SPECIFICATION

(11) **EP 3 046 017 B1**
(45) Date of publication and mention of the grant of the patent: **21.08.2019**
(21) Application number: 16151148.0
(22) Date of filing: 13.01.2016
(51) Int. Cl.: G06F 3/0488, G06F 3/041, G06F 1/3231, G06F 21/31, H04M 1/725, H04M 1/67, G06F 1/3234

(54) **UNLOCKING METHOD, DEVICE AND TERMINAL**
FREIGABEVERFAHREN, -VORRICHTUNG UND -ENDGERÄT
PROCÉDÉ, DISPOSITIF ET TERMINAL DE DÉVERROUILLAGE

(30) Priority: 13.01.2015 CN 201510017639; 27.01.2015 CN 201510041290
(43) Date of publication of application: 20.07.2016
(73) Proprietor: Xiaomi Inc., Beijing 100085 (CN)
(72) Inventor: JIANG, Zhongsheng, 100085 BEIJING (CN); YANG, Kun, 100085 BEIJING (CN); TAO, Jun, 100085 BEIJING (CN)
(74) Representative: Delumeau, François Guy

(56) References cited:
- EP-A1- 2 629 181
- EP-A1- 2 650 768
- EP-A1- 2 712 151
- EP-A1- 2 816 442
- WO-A1-2014/134930
- US-A1- 2012 038 571
- US-B1- 8 502 800

## Description

### TECHNICAL FIELD

The present disclosure relates to the technical field of electronic devices and, more particularly, to an unlocking method, device and terminal.

### BACKGROUND

With the continuous increase of functions of terminals, more and more new functions of the terminals bring more convenience to users.

As a basic unit for human-computer interaction, the touch screen has a problem of being unintendedly touched. Since the sensitivity of the touch screen is high, convenient operations are brought to the user, however at the same time, the probability of unintended touch greatly increases. For example, when the mobile phone is put into the pocket or the bag, various unintended responses may easily occur. Even when the mobile phone is in a sleeping mode, the mobile phone may be activated mistakenly due to an unintended touch.

Document EP 2816442 A1 discloses an electronic device including a touch screen and further comprising side sensors to sense a grip pattern and means for controlling a predetermined function based on the grip pattern.

Document WO 2014/134930 A1 discloses a method for unlocking a touch screen based on a gripping state acquired according to a signal from grip sensors on the side of a touchscreen electronic device.

### SUMMARY

In order to overcome the problems existing in the related art, the embodiments of the present disclosure provide an unlocking method, device and terminal for reducing the probability of unintended operations.

According to a first aspect, the invention relates to an unlocking method as defined in the appended independent claim 1. Preferred embodiments of the method are defined in the appended dependent claims 2 to 4.

According to a second aspect, the invention relates to an unlocking device as defined in the appended independent claim 5. Preferred embodiments of the device are defined in the appended dependent claims 6 to 8.

According to a third aspect, the invention relates to a terminal as defined in the appended claim 9.

In one particular embodiment, the steps of the unlocking method are determined by computer program instructions.

Consequently, according to a fourth aspect, the invention is also directed to a computer program for executing the steps of an unlocking method as referred to above when this program is executed by a computer.

This program can use any programming language and take the form of source code, object code or a code intermediate between source code and object code, such as a partially compiled form, or any other desirable form.

The invention is also directed to a computer-readable recording medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by embodiments of the present disclosure may comprise the following advantageous effects: signals at edges of the touch screen of the terminal are collected, whether the terminal is held by the user is judged according to the collected signals, and when the terminal is held by the user and the terminal is in the sleeping state, the terminal is unlocked; in this way, the user can unlock the terminal after holding the terminal, thereby the convenience and the intelligence of unlocking by the user is improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 illustrates a flow chart of an unlocking method, according to one exemplary embodiment of the present disclosure.
Fig. 2 illustrates a schematic diagram of providing a self-contained sensor at an edge of a touch screen, according to one exemplary embodiment of the present disclosure.
Fig. 3 illustrates a signal collected when a user holds a terminal by his/her left hand, according to one exemplary embodiment of the present disclosure.
Fig. 4 illustrates a block diagram of an unlocking device, according to one exemplary embodiment of the present disclosure.
Fig. 5 illustrates a block diagram of another unlocking device, according to one exemplary embodiment of the present disclosure.
Fig. 6 illustrates a block diagram of further another unlocking device, according to one exemplary embodiment of the present disclosure.
Fig. 7 illustrates a block diagram of a terminal suitable for the unlocking device, according to one exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

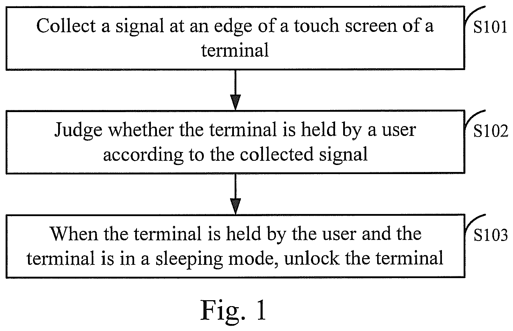

Fig. 1 illustrates a flow chart of an unlocking method, according to one exemplary embodiment. As shown in Fig. 1, the above unlocking method is applicable to terminals, such as mobile phones and tablet computers. The method includes the following steps.

In step S101, a signal at an edge of a touch screen of a terminal is collected.

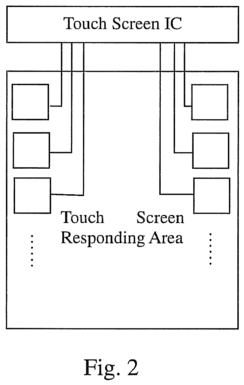

For instance, in the present disclosure, a self-containing solution is adopted at an edge area of the touch screen, thereby a high signal to noise ratio (SNR) can be provided; and signals are collected from multiple channels, thereby the signals of holding the edge by hand are collected. As shown in Fig. 2, a plurality of self-containing sensors are provided at left and right edges of the touch screen. In order to further improve SNR in the edge area, a shielding layer may be additionally added below these edge self-containing sensors for shielding the noise interference from the below display screen. The need of the shielding layer depends on whether the actual SNR satisfies requirements. Two rectangular shielding layers may be disposed below the self-containing sensors located at the left and right sides, or the shielding layer may be disposed at the entire screen, so as to shield the noise interference from the below display screen.

In step S102, whether the terminal is held by a user is judged according to the collected signal.

In one embodiment, the above step S102 may include the following steps A1-A2.

In step A1, whether a first signal and a second signal are collected at one side edge of the touch screen of the terminal and at least a third signal is collected at the other side edge of the touch screen of the terminal are judged, wherein the first signal is greater than the second signal, and the first signal is greater than the third signal.

In step A2, if the first, second and third signals are collected, it is determined that the terminal is held by a user.

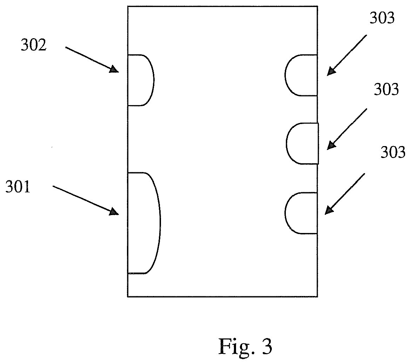

For instance, as shown in Fig. 3, one side of the touch screen corresponds to touch signals of a thumb and a palm of the hand holding the terminal, the touch signals corresponding to the second and first signals respectively; and the other side corresponds to one to four touch signals of other fingers of the hand holding the terminal, these touch signals corresponding to the third signal. Fig. 3 illustrates the condition in which the left hand holds the terminal. The signals collected at the left side of the touch screen are a palm touch signal (i.e., the first signal 301) and a thumb signal (i.e., the second signal 302); and the signal at the right side of the touch screen is identified to be touch signals of other fingers of the left hand (i.e., the third signal 303).

Through the above signals, it may be judged not only whether the user holds the terminal, but also whether the user holds the terminal by his/her left hand or right hand. When the signals at the left side of the touch screen are the first and second signals and the signal at the right side is the third signal, it is judged that the terminal is held by the left hand; and when the signals at the right side of the touch screen are the first and second signals and the signal at the left side is the third signal, it is judged that the terminal is held by the right hand.

In step S103, when the terminal is held by the user and the terminal is in a sleeping mode, the terminal is unlocked.

In one embodiment, the above step S102 may include: judging whether the terminal is held by a left hand or a right hand of the user according to the collected signals. The above step S103 may include: when the terminal is held by the left hand or the right hand of the user and the terminal is in a sleeping mode, unlocking the terminal.

For instance, based on the above signals, when the terminal is in a sleeping mode, the touch screen is turned on and a scan of the edge sensor is started. When the user holds the terminal, the touch screen makes a response and judges whether the terminal is held by a left hand or a right hand. If the terminal is held by corresponding left or right hand, an interrupt is sent to a system in the terminal to awake the terminal and perform an unlocking operation; and if it is judged that the terminal is not held by corresponding left or right hand, the system of the terminal continues sleeping without the unlocking operation.

In this way, the user may awake the system and unlock the terminal without any additional operation. The holding by hand is identified by utilizing the current touch screen without any additional component.

In one embodiment, the method in the present disclosure may further include: when the terminal is held by the user and a touch event is occurred on the touch screen of the terminal, responding to the touch event.

For example, according to the above signals, the function of judging whether the edge of the terminal is held by hand is started. When a touch event occurs on the touch screen, whether the terminal is held by a user is detected at first. If the terminal is judged to be held by the user, no matter by right hand or left hand, the system of the terminal responds to this touch event. If the terminal is not held by the user, the system of the terminal ignores this touch event.

In one embodiment, the method in the present disclosure may further include the following steps B1-B2.

In step B1, when the terminal is held by a user and a touch event occurs on the touch screen of the terminal, the touch event is responded to if the intensity of a signal generated by the touch event is greater than a first touch event response threshold.

In step B2, when the terminal is not held by the user and a touch event occurs on the touch screen of the terminal, the touch event is responded to if the intensity of a signal generated by the touch event is greater than a second touch event response threshold.

The first touch event response threshold is greater than the second touch event response threshold.

For instance, according to the above signals, the function of judging whether the edge of the terminal is held by hand is started. When a touch event occurs on the touch screen, whether the terminal is held by a user is judged at first. If the terminal is judged to be held by the user, an intensity of the touch signal will be relatively strong, thus a relatively high first touch event response threshold is used to reduce the sensitivity. If the terminal is not held by the user, the intensity of the signal will be relatively low, thus a relatively low second touch event response threshold is used to increase the sensitivity.

In this way, the touch screen has a consistent touch sensitivity under different operating environments or operating modes, which solves the problem of inconsistent touch sensitivities.

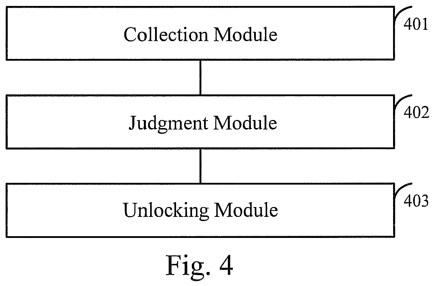

Fig. 4 illustrates a block diagram of an unlocking device, according to one exemplary embodiment of the present disclosure. As shown in Fig. 4, the above unlocking device is applicable to terminals, such as mobile phones and tablet computers. The unlocking device includes a collection module 401, a judgment module 402, and an unlocking module 403.

The collection module 401 is configured to collect a signal at an edge of a touch screen of a terminal.

The judgment module 402 is configured to judge whether the terminal is held by a user according to the collected signal.

The unlocking module 403 is configured to unlock the terminal when the terminal is held by the user and the terminal is in a sleeping mode.

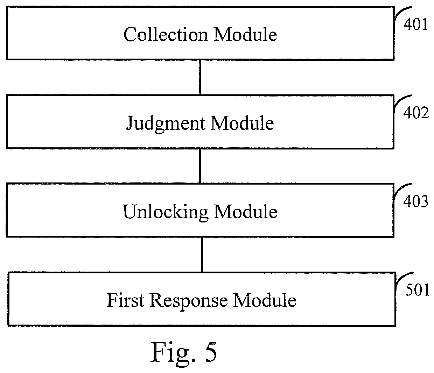

In one embodiment, as shown in Fig. 5, the device may further include a first response module 501.

The first response module 501 is configured to, when the terminal is held by the user and a touch event occurs on the touch screen of the terminal, respond to the touch event.

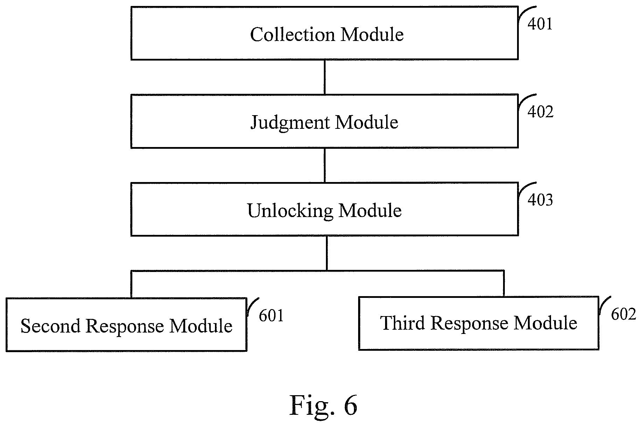

In one embodiment, as shown in Fig. 6, the device may further include a second response module 601 and a third response module 602.

The second response module 601 is configured to, when the terminal is held by the user and a touch event occurs on the touch screen of the terminal, respond to the touch event if the intensity of a signal generated by the touch event is greater than a first touch event response threshold.

The third response module 602 is configured to, when the terminal is not held by the user and a touch event occurs on the touch screen of the terminal, respond to the touch event if the intensity of a signal generated by the touch event is greater than a second touch event response threshold.

The first touch event response threshold is greater than the second touch event response threshold.

In one embodiment, the judgment module may include a first judgment submodule and a first determination submodule.

The first judgment submodule is configured to judge whether a first signal and a second signal are collected at one side edge of the touch screen of the terminal and at least a third signal is collected at the other side edge of the touch screen of the terminal, wherein the first signal is greater than the second signal, and the first signal is greater than the third signal.

The first determination submodule is configured to, if the first, second and third signals are collected, determine that the terminal is held by a user.

In one embodiment, the judgment module may include a second judgment submodule.

The second judgment submodule is configured to judge whether the terminal is held by left hand or right hand of the user according to the collected signal.

The unlocking module may include an unlocking submodule.

The unlocking submodule is configured to unlock the terminal when the terminal is held by left or right hand of the user and the terminal is in a sleeping mode.

The technical solution provided by embodiments of the present disclosure may include the following advantageous effects: signals at edges of the touch screen of the terminal are collected, whether the terminal is held by the user is judged according to the collected signals, and when the terminal is held by the user and the terminal is in the sleeping state, the terminal is unlocked; in this way, the user can unlock the terminal after holding the terminal, thereby the convenience and the intelligence of unlocking by the user are improved.

One terminal includes any of the above-described devices, a touch screen and a sensor, wherein the sensor is located at an edge of the touch screen of the terminal.

In one embodiment, the terminal further includes a shielding layer which is located between the sensor and a display screen of the terminal.

For instance, in the present disclosure, a self-containing solution is adopted at an edge area of the touch screen, thereby a high signal to noise ratio (SNR) can be provided; and signals are collected from multiple channels, thereby the signals of holding the edge by hand are collected. As shown in Fig. 2, a plurality of self-containing sensors are provided at left and right edges of the touch screen. In order to further improve SNR in the edge area, a shielding layer may be additionally added below these edge self-containing sensors for shielding the noise interference from the below display screen. The need of the shielding layer depends on whether the actual SNR satisfies requirements. Two rectangular shielding layers may be disposed below the self-containing sensors located at the left and right sides, or the shielding layer may be disposed at the entire screen, so as to shield the noise interference from the below display screen.

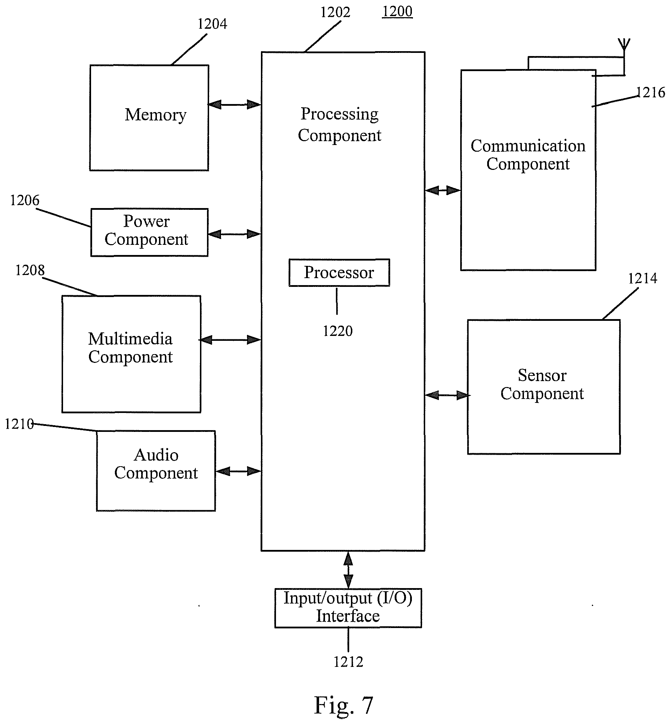

Fig. 7 illustrates a block diagram of an unlocking device 1200, according to one exemplary embodiment. The device is applicable to terminal devices. For example, the device 1200 may be a mobile phone, a computer, a digital broadcast terminal, a messaging device, a gaming console, a tablet, a medical device, exercise equipment, a personal digital assistant, and the like.

Referring to Fig. 7, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being defined by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. An unlocking method comprising:
collecting (S101) a signal of a terminal;
judging (S102) whether the terminal is held by a user according to the collected signal; and
if the terminal is judged to be held by the user according to said judging step (S102) and if the terminal is in a sleeping mode, unlocking (S103) the terminal,
the method being **characterized in that** the signal is collected from a touch screen of the terminal in response to a touch event on the touch screen;
and **in that** the step (S102) of judging whether the terminal is held by the user according to the collected signal comprises:
judging whether a first signal (301) and a second signal (302) are collected at one side edge of the touch screen of the terminal and at least a third signal (303) is collected at the other side edge of the touch screen of the terminal, wherein the first signal is greater than the second signal, and the first signal is greater than the third signal; and
if the first, second and third signals are collected, determining that the terminal is held by the user.

2. The method according to claim 1, **characterized in that**, the method further comprises:
after the terminal is unlocked, if the terminal is judged to be held by the user and if a further touch event is occurred on the touch screen of the terminal, responding to the further touch event.

3. The method according to claim 1, **characterized in that**, the method further comprises:
after the terminal is unlocked, if the terminal is judged to be held by the user and if a further touch event is occurred on the touch screen of the terminal, responding to the further touch event if the intensity of a signal generated by said further touch event is greater than a first touch event response threshold; and
after the terminal is unlocked, if the terminal is not judged to be held by the user and if a further touch event is occurred on the touch screen of the terminal, responding to the further touch event if the intensity of a signal generated by said further touch event is greater than a second touch event response threshold,
wherein the first touch event response threshold is greater than the second touch event response threshold.

4. The method according to any one of claims 1 to 3, **characterized in that**:
the step of judging whether the terminal is held by the user according to the collected signal comprises a judging sub-step to judge whether the terminal is held by a left hand or a right hand of the user according to the collected signal; and **in that**
the step (S103) of unlocking the terminal if the terminal is judged to be held by the user and if the terminal is in the sleeping mode comprises:
if the terminal is judged to be held by the left hand or by the right hand of the user and if the terminal is in the sleeping mode, unlocking the terminal.

5. An unlocking device implemented in a terminal comprising:
a collection module (401) configured to collect a signal of the terminal;
a judgment module (402) configured to judge whether the terminal is held by a user according to the collected signal; and
an unlocking module (403) configured to, if the terminal is judged to be held by the user by said judgement module (402) and if the terminal is in a sleeping mode, unlock the terminal;
the device being **characterized in that** the signal is collected from a touch screen of the terminal in response to a touch event on the touch screen;
and **in that** the judgment module (402) comprises:
a first judgment submodule configured to judge whether a first signal (301) and a second signal (302) are collected at one side edge of the touch screen of the terminal and at least a third signal (303) is collected at the other side edge of the touch screen of the terminal, wherein the first signal is greater than the second signal, and the first signal is greater than the third signal; and
a first determination submodule configured to, if the first, second and third signals are collected, determine that the terminal is held by user.

6. The device according to claim 5, **characterized in that**, the device further comprises:
a first response module (501) configured to, after the terminal is unlocked, if the terminal is judged to be held by the user and if a further touch event is occurred on the touch screen of the terminal, respond to the further touch event.

7. The device according to claim 5, **characterized in that**, the device further comprises:
a second response module (601) configured to, after the terminal is unlocked, if the terminal is judged to be held by the user and if a further touch event is occurred on the touch screen of the terminal, respond to the further touch event if the intensity of a signal generated by said further touch event is greater than a first touch event response threshold; and
a third response module (602) configured to, after the terminal is unlocked, if the terminal is not judged to be held by the user and if a further touch event is occurred on the touch screen of the terminal, respond to the further touch event if the intensity of a signal generated by said further touch event is greater than a second touch event response threshold,
wherein the first touch event response threshold is greater than the second touch event response threshold.

8. The device according to any one of claims 5 to 7, **characterized in that**, the judgment module (402) comprises:
a second judgment submodule configured to judge whether the terminal is held by a left hand or a right hand of a user according to the collected signal; and
the unlocking module (403) comprises:
an unlocking submodule configured to, if the terminal is judged to be held by the left hand or by the right hand of the user and if the terminal is in the sleeping mode, unlock the terminal.

9. A terminal comprising the unlocking device according to any one of claims 5-8, said touch screen and a plurality of sensors located at said side edges of the touch screen.

10. The terminal according to claim 9, **characterized in that**, the terminal further comprises a shielding layer, wherein the shielding layer is located between the sensor and a display screen of the terminal.

11. A computer program including instructions for executing the steps of an unlocking method according to any one of claims 1 to 4 when said program is executed by a computer.

12. A recording medium readable by a computer and having recorded thereon a computer program including instructions for executing the steps of an unlocking method according to any one of claims 1 to 4.

## Patentansprüche

1. Entsperrungsverfahren, umfassend:
Aufnehmen (S101) eines Signals von einem Endgerät,
Beurteilen (S102), ob das Endgerät gemäß dem aufgenommenen Signal von einem Benutzer gehalten wird, und
wenn gemäß dem Schritt (S102) des Beurteilens beurteilt wird, dass das Endgerät von dem Benutzer gehalten wird, und wenn sich das Endgerät in einem Ruhemodus befindet, Entsperren (S103) des Endgeräts,
wobei das Verfahren **dadurch gekennzeichnet ist, dass** das Signal von einem Touchscreen des Endgeräts als Reaktion auf ein Berührungsereignis auf dem Touchscreen aufgenommen wird,
und dadurch, dass der Schritt (S102) des Beurteilens, ob das Endgerät gemäß dem aufgenommenen Signal von dem Benutzer gehalten wird, umfasst:
Beurteilen, ob ein erstes Signal (301) und ein zweites Signal (302) an einer Seitenkante des Touchscreens des Endgeräts aufgenommen werden und mindestens ein drittes Signal (303) an der anderen Seitenkante des Touchscreens des Endgeräts aufgenommen wird, wobei das erste Signal größer als das zweite Signal ist und das erste Signal größer als das dritte Signal ist, und
wenn das erste, zweite und dritte Signal aufgenommen werden, Bestimmen, dass das Endgerät von dem Benutzer gehalten wird.

2. Verfahren nach Anspruch 1, **dadurch gekennzeichnet, dass** das Verfahren ferner umfasst:
nachdem das Endgerät entsperrt ist, wenn beurteilt wird, dass das Endgerät von dem Benutzer gehalten wird, und wenn ein weiteres Berührungsereignis auf dem Touchscreen des Endgeräts stattfindet, Reagieren auf das weitere Berührungsereignis.

3. Verfahren nach Anspruch 1, **dadurch gekennzeichnet, dass** das Verfahren ferner umfasst:
nachdem das Endgerät entsperrt ist, wenn beurteilt wird, dass das Endgerät von dem Benutzer gehalten wird, und wenn ein weiteres Berührungsereignis auf dem Touchscreen des Endgeräts stattfindet, Reagieren auf das weitere Berührungsereignis, wenn die Stärke eines Signals, das durch das weitere Berührungsereignis erzeugt wird, größer als ein erster Berührungsereignis-Reaktionsschwellenwert ist, und
nachdem das Endgerät entsperrt ist, wenn beurteilt wird, dass das Endgerät nicht von dem Benutzer gehalten wird, und wenn ein weiteres Berührungsereignis auf dem Touchscreen des Endgeräts stattfindet, Reagieren auf das weitere Berührungsereignis, wenn die Stärke eines Signals, das durch das weitere Berührungsereignis erzeugt wird, größer als ein zweiter Berührungsereignis-Reaktionsschwellenwert ist,
wobei der erste Berührungsereignis-Reaktionsschwellenwert größer als der zweite Berührungsereignis-Reaktionsschwellenwert ist.

4. Verfahren nach einem der Ansprüche 1 bis 3, **dadurch gekennzeichnet, dass**:
der Schritt des Beurteilens, ob das Endgerät gemäß dem aufgenommenen Signal von dem Benutzer gehalten wird, einen Beurteilungs-Teilschritt zum Beurteilen, ob das Endgerät gemäß dem aufgenommenen Signal von der linken Hand oder der rechten Hand des Benutzers gehalten wird, umfasst, und dadurch, dass
der Schritt (S103) des Entsperrens des Endgeräts, wenn beurteilt wird, dass das Endgerät von dem Benutzer gehalten wird, und wenn sich das Endgerät in dem Ruhemodus befindet, umfasst:
wenn beurteilt wird, dass das Endgerät von der linken Hand oder von der rechten Hand des Benutzers gehalten wird, und wenn sich das Endgerät in dem Ruhemodus befindet, Entsperren des Endgeräts.

5. Entsperrungsvorrichtung, die in einem Endgerät umgesetzt ist, umfassend:
ein Aufnahmemodul (401), das dazu ausgestaltet ist, ein Signal des Endgeräts aufzunehmen,
ein Beurteilungsmodul (402), das dazu ausgestaltet ist, zu beurteilen, ob das Endgerät gemäß dem aufgenommenen Signal von einem Benutzer gehalten wird, und
ein Entsperrungsmodul (403), das dazu ausgestaltet ist, wenn von dem Beurteilungsmodul (402) beurteilt wird, dass das Endgerät von dem Benutzer gehalten wird, und wenn sich das Endgerät in einem Ruhemodus befindet, das Endgerät zu entsperren,
wobei die Vorrichtung **dadurch gekennzeichnet ist, dass** das Signal von einem Touchscreen des Endgeräts als Reaktion auf ein Berührungsereignis auf dem Touchscreen aufgenommen wird,
und dadurch, dass das Beurteilungsmodul (402) umfasst:
ein erstes Beurteilungs-Teilmodul, das dazu ausgestaltet ist, zu beurteilen, ob ein erstes Signal (301) und ein zweites Signal (302) an einer Seitenkante des Touchscreens des Endgeräts aufgenommen werden und mindestens ein drittes Signal (303) an der anderen Seitenkante des Touchscreens des Endgeräts aufgenommen wird, wobei das erste Signal größer als das zweite Signal ist und das erste Signal größer als das dritte Signal ist, und
ein erstes Bestimmungs-Teilmodul, das dazu ausgestaltet ist, wenn das erste, zweite und dritte Signal aufgenommen sind, zu bestimmen, dass das Endgerät von einem Benutzer gehalten wird.

6. Vorrichtung nach Anspruch 5, **dadurch gekennzeichnet, dass** die Vorrichtung ferner umfasst:
ein erstes Reaktionsmodul (501), das dazu ausgestaltet ist, nachdem das Endgerät entsperrt ist, wenn beurteilt wird, dass das Endgerät von dem Benutzer gehalten wird, und wenn ein weiteres Berührungsereignis auf dem Touchscreen des Endgeräts stattfindet, auf das weitere Berührungsereignis zu reagieren.

7. Vorrichtung nach Anspruch 5, **dadurch gekennzeichnet, dass** die Vorrichtung ferner umfasst:
ein zweites Reaktionsmodul (601), das dazu ausgestaltet ist, nachdem das Endgerät entsperrt ist, wenn beurteilt wird, dass das Endgerät von dem Benutzer gehalten wird, und wenn ein weiteres Berührungsereignis auf dem Touchscreen des Endgeräts stattfindet, auf das weitere Berührungsereignis zu reagieren, wenn die Stärke eines Signals, das durch das weitere Berührungsereignis erzeugt wird, größer als ein erster Berührungsereignis-Reaktionsschwellenwert ist, und
ein drittes Reaktionsmodul (602), das dazu ausgestaltet ist, nachdem das Endgerät entsperrt ist, wenn beurteilt wird, dass das Endgerät nicht von dem Benutzer gehalten wird, und wenn ein weiteres Berührungsereignis auf dem Touchscreen des Endgeräts stattfindet, auf das weitere Berührungsereignis zu reagieren, wenn die Stärke eines Signals, das durch das weitere Berührungsereignis erzeugt wird, größer als ein zweiter Berührungsereignis-Reaktionsschwellenwert ist,
wobei der erste Berührungsereignis-Reaktionsschwellenwert größer als der zweite Berührungsereignis-Reaktionsschwellenwert ist.

8. Vorrichtung nach einem der Ansprüche 5 bis 7, **dadurch gekennzeichnet, dass** das Beurteilungsmodul (403) umfasst:
ein zweites Beurteilungs-Teilmodul, das dazu ausgestaltet ist, zu beurteilen, ob das Endgerät gemäß dem aufgenommenen Signal von der linken Hand oder der rechten Hand eines Benutzers gehalten wird, und
das Entsperrungsmodul (403) umfasst:
ein Entsperrungs-Teilmodul, das dazu ausgestaltet ist, wenn beurteilt wird, dass das Endgerät von der linken Hand oder von der rechten Hand des Benutzers gehalten wird, und wenn sich das Endgerät in dem Ruhemodus befindet, das Endgerät zu entsperren.

9. Endgerät, welches die Entsperrungsvorrichtung nach einem der Ansprüche 5 bis 8, den Touchscreen und mehrere Sensoren umfasst, die an den Seitenkanten des Touchscreens platziert sind.

10. Endgerät nach Anspruch 9, **dadurch gekennzeichnet, dass** das Endgerät ferner eine Abschirmschicht umfasst, wobei die Abschirmschicht zwischen dem Sensor und einem Anzeigebildschirm des Endgeräts platziert ist.

11. Computerprogramm, welches Anweisungen zum Ausführen der Schritte eines Entsperrungsverfahrens nach einem der Ansprüche 1 bis 4 beinhaltet, wenn das Programm von einem Computer ausgeführt wird.

12. Aufzeichnungsmedium, welches von einem Computer gelesen werden kann und auf welchem ein Computerprogramm aufgezeichnet ist, das Anweisungen zum Ausführen der Schritte eines Entsperrungsverfahrens nach einem der Ansprüche 1 bis 4 beinhaltet.

## Revendications

1. Procédé de déverrouillage comprenant les étapes ci-dessous consistant à :
collecter (S101) un signal d'un terminal ;
juger (S102) si le terminal est tenu par un utilisateur selon le signal collecté ; et
si le terminal est jugé comme étant tenu par l'utilisateur selon ladite étape de jugement (S102), et si le terminal est en mode veille, déverrouiller (S103) le terminal ;
le procédé étant **caractérisé en ce que** le signal est collecté à partir d'un écran tactile du terminal, en réponse à un événement tactile sur l'écran tactile ; et
**en ce que** l'étape (S102) consistant à juger si le terminal est tenu par l'utilisateur selon le signal collecté comprend l'étape ci-dessous consistant à :
juger si un premier signal (301) et un deuxième signal (302) sont collectés au niveau d'un bord latéral de l'écran tactile du terminal, et si au moins un troisième signal (303) est collecté au niveau de l'autre bord latéral de l'écran tactile du terminal, dans lequel le premier signal est supérieur au deuxième signal et le premier signal est supérieur au troisième signal ; et
si les premier, deuxième et troisième signaux sont collectés, déterminer que le terminal est tenu par l'utilisateur.

2. Procédé selon la revendication 1, **caractérisé en ce que** le procédé comprend en outre l'étape ci-dessous consistant à :
après le déverrouillage du terminal, si le terminal est jugé comme étant tenu par l'utilisateur, et si un événement tactile supplémentaire s'est produit sur l'écran tactile du terminal, répondre à cet événement tactile supplémentaire.

3. Procédé selon la revendication 1, **caractérisé en ce que** le procédé comprend en outre l'étape ci-dessous consistant à :
après le déverrouillage du terminal, si le terminal est jugé comme étant tenu par l'utilisateur, et si un événement tactile supplémentaire s'est produit sur l'écran tactile du terminal, répondre à cet événement tactile supplémentaire si l'intensité d'un signal généré par ledit événement tactile supplémentaire est supérieure à un premier seuil de réponse d'événement tactile ; et
après le déverrouillage du terminal, si le terminal n'est pas jugé comme étant tenu par l'utilisateur, et si un événement tactile supplémentaire s'est produit sur l'écran tactile du terminal, répondre à l'événement tactile supplémentaire si l'intensité d'un signal généré par ledit événement tactile supplémentaire est supérieure à un second seuil de réponse d'événement tactile ;
dans lequel le premier seuil de réponse d'événement tactile est supérieur au second seuil de réponse d'événement tactile.

4. Procédé selon l'une quelconque des revendications 1 à 3, **caractérisé en ce que** :
l'étape consistant à juger si le terminal est tenu par l'utilisateur selon le signal collecté comprend :
une sous-étape de jugement consistant à juger si le terminal est tenu par une main gauche ou une main droite de l'utilisateur selon le signal collecté, et **en ce que** :
l'étape (S103) de déverrouillage du terminal si le terminal est jugé comme étant tenu par l'utilisateur, et si le terminal est en mode veille, comprend l'étape ci-dessous consistant à :
si le terminal est jugé comme étant tenu par la main gauche ou par la main droite de l'utilisateur et si le terminal est en mode veille, déverrouiller le terminal.

5. Dispositif de déverrouillage mis en oeuvre dans un terminal comprenant :
un module de collecte (401) configuré de manière à collecter un signal du terminal ;
un module de jugement (402) configuré de manière à juger si le terminal est tenu par un utilisateur selon le signal collecté ; et
un module de déverrouillage (403) configuré de manière à, si le terminal est jugé comme étant tenu par l'utilisateur par ledit module de déverrouillage (402), et si le terminal est en mode veille, déverrouiller le terminal ;
le dispositif étant **caractérisé en ce que** le signal est collecté à partir d'un écran tactile du terminal, en réponse à un événement tactile sur l'écran tactile ; et
**en ce que** le module de jugement (402) comprend :
un premier sous-module de jugement configuré de manière à juger si un premier signal (301) et un deuxième signal (302) sont collectés au niveau d'un bord latéral de l'écran tactile du terminal, et si au moins un troisième signal (303) est collecté au niveau de l'autre bord latéral de l'écran tactile du terminal, dans lequel le premier signal est supérieur au deuxième signal et le premier signal est supérieur au troisième signal ; et
un premier sous-module de détermination configuré de manière à, si les premier, deuxième et troisième signaux sont collectés, déterminer que le terminal est tenu par un utilisateur.

6. Dispositif selon la revendication 5, **caractérisé en ce que** le dispositif comprend en outre :
un premier module de réponse (501) configuré de manière à, après le déverrouillage du terminal, si le terminal est jugé comme étant tenu par l'utilisateur, et si un événement tactile supplémentaire s'est produit sur l'écran tactile du terminal, répondre à cet événement tactile supplémentaire.

7. Dispositif selon la revendication 5, **caractérisé en ce que** le dispositif comprend en outre :
un deuxième module de réponse (601) configuré de manière à, après le déverrouillage du terminal, si le terminal est jugé comme étant tenu par l'utilisateur, et si un événement tactile supplémentaire s'est produit sur l'écran tactile du terminal, répondre à cet événement tactile supplémentaire si l'intensité d'un signal généré par ledit événement tactile supplémentaire est supérieure à un premier seuil de réponse d'événement tactile ; et
un troisième module de réponse (602) configuré de manière à, après le déverrouillage du terminal, si le terminal n'est pas jugé comme étant tenu par l'utilisateur, et si un événement tactile supplémentaire s'est produit sur l'écran tactile du terminal, répondre à l'événement tactile supplémentaire si l'intensité d'un signal généré par ledit événement tactile supplémentaire est supérieure à un second seuil de réponse d'événement tactile ;
dans lequel le premier seuil de réponse d'événement tactile est supérieur au second seuil de réponse d'événement tactile.

8. Dispositif selon l'une quelconque des revendications 5 à 7, **caractérisé en ce que** le module de jugement (402) comprend :
un second sous-module de jugement configuré de manière à juger si le terminal est tenu par la main gauche ou la main droite d'un utilisateur selon le signal collecté ; et
le module de déverrouillage (403) comprend :
un sous-module de déverrouillage configuré de manière à, si le terminal est jugé comme étant tenu par la main gauche ou par la main droite de l'utilisateur, et si le terminal est en mode veille, déverrouiller le terminal.

9. Terminal comprenant le dispositif de déverrouillage selon l'une quelconque des revendications 5 à 8, ledit écran tactile, et une pluralité de capteurs situés au niveau desdits bords latéraux de l'écran tactile.

10. Terminal selon la revendication 9, **caractérisé en ce que** le terminal comprend en outre une couche de blindage, dans lequel la couche de blindage est située entre le capteur et un écran d'affichage du terminal.

11. Programme informatique incluant des instructions pour exécuter les étapes d'un procédé de déverrouillage selon l'une quelconque des revendications 1 à 4, lorsque ledit programme est exécuté par un ordinateur.

12. Support d'enregistrement lisible par un ordinateur et sur lequel est enregistré un programme informatique incluant des instructions pour exécuter les étapes d'un procédé de déverrouillage selon l'une quelconque des revendications 1 à 4.
